# EUROPEAN PATENT SPECIFICATION

(11) **EP 2 001 954 B1**
(45) Date of publication and mention of the grant of the patent: **01.09.2010**
(21) Application number: 07719397.7
(22) Date of filing: 14.03.2007
(51) Int. Cl.: C08L 23/22, C08J 3/20, C08K 3/36, C08L 47/00, C08L 9/06

(54) **POLYMERIZATION PROCESS FOR PREPARING BUTYL RUBBER NANOCOMPOSITES**
POLYMERISATIONSVERFAHREN ZUR HERSTELLUNG VON BUTYLKAUTSCHUK-NANOVERBUNDWERKSTOFFEN
PROCEDE DE POLYMERISATION POUR LA PREPARATION DE NANOCOMPOSITES DE CAOUTCHOUC BUTYLIQUE

(30) Priority: 29.03.2006 US 786950 P
(43) Date of publication of application: 17.12.2008
(73) Proprietor: Lanxess Inc., Sarnia, Ontario N7T 7M2 (CA)
(72) Inventor: OSMAN, Akhtar, Sarnia, Ontario N7T 5X7 (CA); CROCKETT, Treena, Petrolia, Ontario N0N 1R0 (CA)
(74) Representative: Deblon, Jörg-Stephan
(86) International application number: PCT/CA2007/000425
(87) International publication number: WO 2007/109877

(56) References cited:
- CA-A1- 2 221 649
- CA-A1- 2 221 649
- CA-A1- 2 406 895
- CA-A1- 2 406 895
- US-A- 6 087 016
- MINGYI LIAO: "Structure and Properties of Polybutadiene/Montmorillonite Nanocomposites Prepared by In Situ Polymerization" JOURNAL OF APPLIED POLYMER SCIENCE, vol. 99, 19 January 2006 (2006-01-19), pages 3615-3621, XP002521849 ONLINE
- S. TAKAHASHI: "Gas barrier properties of butyl rubber/vermiculite nanocomposite coatings" POLYMER, vol. 47, 23 March 2006 (2006-03-23), pages 3083-3093, XP002521850 online
- MADHUCHHANDA MAITI: "Brominated Poly(isobutykene-co-para-methylstyrene) (BIMS)-Clay Nanocomposites: Synthesis and Characteriziation" JOURNAL OF POLYMER SCIENCE: PART B: POLYMER PHYSICS, vol. 42, 15 December 2004 (2004-12-15), pages 4489-4502, XP002521851 online
- TIEHONG CHEN: "Exfoliation of Organo-Clay in Telechelic Liquid Polybutadiene Rubber" MACROMOLECULES, vol. 38, no. 9, 23 March 2005 (2005-03-23), pages 4030-4033, XP002521852 online
- LIAO M. ET AL.: 'Structure and Properties of Polybutadiene/Montmorillonite Nanocomposites Prepared by In Situ Polymerization' JOURNAL OF APPLIED POLYMER SCIENCE vol. 99, 19 January 2006, pages 3615 - 3621

## Description

### Field of the Invention

The invention relates to the polymerization of isoolefins and multiolefins to create butyl rubber and specifically to the preparation of silica-filled butyl rubber polymers during polymerization. More particularly, the invention relates to a polymerization process for preparing silica-filled butyl rubber polymers wherein quaternary onium-ion substituted nanoclays are dispersed in the organic polymerization fluid prior to initiating polymerization.

### Background

Poly(isobutylene-co-isoprene), or IIR, is a synthetic elastomer commonly known as butyl rubber which has been prepared since the 1940's through the random cationic copolymerization of isobutylene with small amounts of isoprene (1-2 mole %) . As a result of its molecular structure, IIR possesses superior air impermeability, a high loss modulus, oxidative stability and extended fatigue resistance.

Butyl rubber is understood to be a copolymer of an isoolefin and one or more, preferably conjugated, multiolefins as comonomers. Commercial butyl comprises a major portion of isoolefin and a minor amount, not more than 2.5 mol %, of a conjugated multiolefin. Butyl rubber or butyl polymer is generally prepared in a slurry process using an organic polymerization fluid, such as methyl chloride, and a Friedel-Crafts catalyst as part of the polymerization initiator. The methyl chloride offers the advantage that AlCl₃, a relatively inexpensive Friedel-Crafts catalyst, is soluble in it, as are the isobutylene and isoprene comonomers. Additionally, the butyl rubber polymer is insoluble in the methyl chloride and precipitates out of solution as fine particles. The polymerization is generally carried out at temperatures of about -90° C to -100° C. See U.S. Patent No. 2,356,128 and Ullmanns Encyclopedia of Industrial Chemistry, volume A 23, 1993, pages 288-295. The low polymerization temperatures are used to achieve molecular weights which are sufficiently high for rubber applications.

Fillers may be added to butyl rubber in order to impart desired physical properties, such as increased hardness, tensile strength, resistance to fatigue or impermeability to various gases. Mineral or non-mineral fillers may be used. Examples of mineral fillers include silica, silicates, clay (such as bentonite or montmorillonite), gypsum, mica, inorganic vermiculite, alumina, titanium dioxide, talc and the like. Examples of non-mineral fillers include carbon blacks and certain rubber gels. These fillers are normally added to the butyl rubber after polymerization, during the compounding or finishing stage.

The improvement in physical properties occurs due to interaction between the elastomeric and filler phases. Since butyl rubber contains very few double bonds as compared with other unsaturated rubbers, very little of this desirable phase interaction takes place. In order to enhance filler interaction, butyl rubber is often modified with polar reactive functional groups such as halide or maleic anhydride functionalities. Increasing the level of unsaturation also has some effect. This functionalization adds extra processing steps and increases material cost. It would be desirable to provide this phase interaction without the need for functionalization of the polymer, permitting greater flexibility in final compound formulation.

Previous attempts to add fillers during the polymerization process have had a free-radical quenching effect that prevents polymerization chain-reactions from occurring and therefore limits the degree of conversion obtained. In addition, previous attempts to add certain mineral fillers, such as clays, directly to the polymerization fluid have resulted in particle agglomeration and clumping, leading to poor dispersion and non-uniform distribution in the polymer. As a result, fillers are not conventionally added during the polymerization of butyl rubber and are instead added afterwards during the compounding or finishing stage. It would be desirable to provide a filled butyl rubber masterbatch that could be subsequently vulcanized and compounded into desired formulations.

Siliceous clays are a particular example of a mineral filler. Each silicate layer is approximately 1 nm in thickness and consists of a central octahedral sheet of alumina fused between two external tetrahedral silica sheets. The gallery spacing between these layers is about 1 nm and occupied by hydrated cations. The environment of the galleries is hydrophilic and thus prevents penetration of the hydrophobic elastomer chains. Siliceous clays normally comprise complexes of an inorganic cation (for example, sodium) with the silicates. Replacement of the inorganic cation with a quaternary onium ion, for example a phosphonium or ammonium ion, forms an onium ion substituted siliceous clay. The surfactant nature of the onium ion allows the hydrophobic elastomer to interact with the hydrophilic galleries, making polymer-clay nanocomposites possible.

Polymer-clay nanocomposites exhibit improved physical properties when compared with conventional silica filled rubber compounds due to a platelet-type dispersion of the clay within the rubber matrix. These enhanced physical properties are only obtained when nano-sized clays are uniformly dispersed throughout the rubber matrix, without appreciable agglomeration. Dispersement can be achieved through solution or melt intercalation. Depending on the degree of dispersement, the polymer-clay nanocomposites can be classified as either intercalated or exfoliated nanocomposites. In intercalated nanocomposites, the clay particles are dispersed in an ordered lamellar structure with large gallery height as a result of the insertion of polymer chains into the gallery. In exfoliated nanocomposites, each silicate layer is delaminated and dispersed in a continuous polymer.

Although butyl rubber-clay nanocomposites have been prepared in the past by melt intercalation using conventional compounding techniques, there is relatively little delamination of the silicate layers and relatively poor dispersement of the clay within the rubber matrix. As a result, the physical properties of these nanocomposites are inferior to those prepared using solution intercalation. A comparison of physical properties of butyl rubber-clay nanocomposites prepared using both solution and melt intercalation techniques is provided in Liang, Yurong; Wang, Yiquing; Wu, Youping; Lu, Yonglai; Zhang, Huifeng; Zhang, Liqun "Preparation and Properties of Isobutylene-Isoprene Rubber (IIR)/Clay Nanocomposites" Polymer Testing (2004), 24(1), pp. 12-17.

From a manufacturing point of view, it would be desirable to create nanocomposites directly during polymerization using solution intercalation techniques. In the literature, attempts have been made to create polymer-clay nanocomposites in solution using non-continuous, laboratory scale polymerization. Examples of these studies are provided in Chen, Su; Kim, II-jin; Faust, Rudolf "Synthesis of well-defined organic-inorganic nanocomposites using living cationic surface-initiated polymerization (LCSIP)" Polymer Preprints (American Chemical Society, Division of Polymer Chemistry) (2003), 44(1), pp. 463-464, for polyisobutylene rubber and in Journal of Applied polymer Science, Vol.99, 3615-3621 (2006) for polybutadiene rubber. These laboratory attempts have been made using isobutylene and butadiene monomers, since the relatively high degree of unsaturation renders solution intercalation during polymerization conceptually viable. However, with butyl rubber, due to the low degree of unsaturation it is currently believed that functionalization is required before any filler interaction can take place. Since functionalization takes place after polymerization, it is presently not considered possible to perform solution intercalation during polymerization with butyl rubber. In addition, it is presently considered that the free-radical quenching effect of fillers on continuous polymerization processes would render any such process economically infeasible. As a result, a butyl rubber-clay nanocomposite has yet to be prepared during polymerization using solution intercalation techniques.

The need therefore remains for a continuous polymerization process for preparing butyl rubber nanocomposites from solution and for improved nanocomposites exhibiting enhanced physical properties.

### Summary of the Invention

According to the present invention, there is provided a process for preparing a butyl rubber nanocomposite comprising: providing an organic fluid suitable for use as a butyl rubber polymerization medium; dispersing a quaternary onium ion substituted siliceous nanoclay in the organic fluid; dissolving in the organic fluid at least one isoolefin monomer and at least one multiolefin monomer; polymerizing the isoolefin monomer and the multiolefin monomer in the presence of the nanoclay, thereby forming a nanocomposite comprising a butyl rubber polymer intercalated with the nanoclay

According to another aspect of the invention, there is provided a butyl rubber nanocomposite prepared by: providing an organic fluid suitable for use as a butyl rubber polymerization medium; dispersing a quaternary onium ion substituted siliceous nanoclay in the organic fluid; dissolving in the organic fluid at least one isoolefin monomer and at least one multiolefin monomer; polymerizing the isoolefin monomer and the multiolefin monomer in the presence of the nanoclay, thereby forming a nanocomposite comprising a butyl rubber polymer intercalated with the nanoclay.

### Detailed Description

The terms "butyl polymer", "butyl rubber" and "butyl rubber polymer" are used interchangeably throughout this specification and are intended to mean a polymer prepared by reacting a major portion of an isoolefin monomer with a minor portion of a multiolefin monomer.

The butyl rubber is not limited to a specific isoolefin. However, isoolefins within the range of from 4 to 16 carbon atoms, in particular 4-8 carbon atoms, such as isobutene, 2-methyl-1-butene, 3-methyl-1-butene, 2-methyl-2-butene, 4-methyl-1-pentene and mixtures thereof are preferred. Most preferred is isobutene.

The butyl rubber is not limited to a specific multiolefin. Every multiolefin copolymerizable with the isoolefins known by the skilled in the art can be used. Multiolefins with in the range of from 4-14 carbon atoms are preferred. A preferred C₄ to C₁₄ multiolefin comprises a C₄ to C₁₀ conjugated diolefin. Some specific non-limiting examples of suitable multiolefins include isoprene, butadiene, 2-methylbutadiene, 2,4-dimethylbutadiene, piperyline, 3-methyl-1,3-pentadiene, 2,4-hexadiene, 2-neopentylbutadiene, 2-methly-1,5-hexadiene, 2,5-dimethly-2,4-hexadiene, 2-methyl-1,4-pentadiene, 2-methyl-1,6-heptadiene, cyclopenta-diene, methylcyclopentadiene, cyclohexadiene, 1-vinyl-cyclohexadiene and mixtures thereof. Isoprene is particularly preferably used.

The butyl polymer may be derived from a mixture comprising from about 70 to about 99.5 parts by weight of the C₄ to C₈ isoolefin monomer and from about 30 to about 0.5 parts by weight of the C₄ to C₁₄ multiolefin monomer. More preferably, the butyl polymer is derived from a mixture comprising from about 80 to about 99.5 parts by weight of the C₄ to C₈ isoolefin monomer and from about 20 to about 0.5 parts by weight of the C₄ to C₁₄ multiolefin monomer.

A preferred butyl polymer for use in the present invention is derived from a mixture comprising from about 97 to about 99.5 parts by weight of isobutylene and from about 3 to about 0.5 parts by weight of isoprene.

Another preferred butyl polymer for use in the present invention comprises a multiolefin content of at least 4.1 mol%, more preferably greater than 5.0 mol%, even more preferably greater than 6.0 mol%, yet even more preferably greater than 7.0 mol%.

Those of skill in the art will recognize that it is possible to include an optional third monomer to produce a butyl terpolymer. For example, it is possible to include a styrenic monomer in the monomer mixture, preferably in an amount up to about 15 percent by weight of the monomer mixture. The preferred styrenic monomer may be selected from the group comprising p-methylstyrene, styrene, α-methylstyrene, p-chlorostyrene, p-methoxystyrene, cyclopentadiene, methylcyclopentadieneindene, indene derivatives and mixtures thereof. The most preferred styrenic monomer may be selected from the group comprising styrene, p-methylstyrene and mixtures thereof. Other suitable copolymerizable termonomers will be apparent to those of skill in the art.

Suitable polymerization processes for producing butyl rubber polymers are known to persons skilled in the art and are further described in US 2,356,128. Generally, the processes involve providing the monomer mixture dissolved in a suitable solvent. The solvents are generally organic fluids. Organic fluids suitable for use in commercial butyl rubber polymerization include inert C₁ to C₄ halogenated hydrocarbons and mixtures thereof, C₅ to C₈ aliphatic hydrocarbons, C₅ to C₈ cyclic hydrocarbons, mixtures of one or more of the halogenated hydrocarbons and one or more of the aliphatic hydrocarbons, and mixtures of one or more of the halogenated hydrocarbons and one or more of the cyclic hydrocarbons. Examples of preferred inert organic fluids or solvents include pentane, hexane, heptane and mixtures thereof with one another or with methyl chloride and/or methylene choride. Most preferably the organic fluid is selected from the group consisting of methyl chloride, methylene chloride, hexane, cyclopentane and mixtures thereof.

A nanoclay is then dispersed in the polymerization fluid. The present invention is not limited to a specific nanoclay. Thus, any nanoclay known by the skilled in the art should be suitable as a starting material. However, natural powdered smectite clays, such as sodium or calcium montmorillonite, or synthetic clays such as hydrotalcite and laponite are preferred as starting materials. Powdered montmorillonite clays are especially preferred. The clays are then modified by substitution of the transition metal for an onium ion, as is known in the art, to provide surfactant functionality to the clay that aids in the dispersion of the clay within the generally hydrophobic polymer environment. Preferred onium ions are phosphorus based (eg: phosphonium ions) and nitrogen based (eg: ammonium ions) and contain functional groups having from 2 to 20 carbon atoms (eg: NR₄ ^{+ -} MMT ).

In addition to silica, the preferred nanoclays also contain some fraction of alumina. The nanoclays may contain from 0.1 to 10 wt% alumina, preferably 0.5 to 5 wt%, more preferably 1 to 3 wt% alumina. Examples of preferred commercially available nanoclays are Cloisite® clays 10A, 20A, 6A, 15A, 30B, or 25A.

The clays are preferably well dispersed in the polymerization fluid. An indicator of dispersion is optical clarity of the polymerization fluid after clay dispersion. The fluid preferably is either clear or exhibits a slight cloudiness after clay dispersion. Although the onium ion functionality is important in providing good dispersion, particle size is also a factor. The clays are provided in nanometer scale particle sizes, preferrably less than 25µ,by volume more preferably from 1 to 50 µ, still more preferably from 1 to 30 µ, yet more preferably from 2 to 20 µ m.

The clays are preferably provided in an amount of from 1 to 40 wt% of the expected amount of butyl rubber polymer, preferably in an amount of from 3 to 30 wt%, more preferably in an amount of from 5 to 15 wt%.

A Friedel-Crafts catalyst is then added to the dissolved monomer mixture as part of the polymerization initiator. Examples of suitable Friedel-Crafts catalysts include AlCl₃, TiCl₄, VCl₅, VCl₃ and BCl₃ It is desirable that a catalyst is selected that is soluble in the polymerization fluid. A preferred catalyst is AlCl₃.

The fluid containing the monomer mixture, nanoclay and catalyst is then provided to a polymerization reactor and polymerization is conducted under conditions known to persons skilled in the art. The polymerization is generally carried out at temperatures of about -90°C to -100°C. The low temperatures are used, *inter alia*, to increase the molecular weight of the polymer produced. Although the addition of fillers normally has a detrimental effect on conversion, in the present invention the addition of the selected nanoclay surprisingly has little impact on conversion. Conversions from about 70-99% can be obtained and a conversion of at least 75% is preferred for economic and process considerations. Without wishing to be limited by theory, it is suspected that the presence of alumina in the catalyst is important in achieving the surprisingly high conversion in the process of the present invention.

A number of finishing techniques may be employed to separate the nanocomposite from the polymerization fluid to thereby make a useful finished product. For example, such techniques may include, for the higher molecular weight polymers, contacting the polymer solution or slurry with copious amounts of hot water thereby flashing the inert organic solvent and any unreacted monomer. The polymer-hot water slurry may then be passed through a tunnel dryer or drying extruder. In another such technique, especially for polymers produced in the presence of an inert organic solvent and having a number average molecular weight of less than about 30,000, the polymer is recovered by (i) contacting the polymer solution or slurry with steam or by applying a vacuum to the polymer solution or slurry to flash off the solvent and any unreacted monomer; (ii) extracting acidic impurities and/or any remaining high boiling diluents with methanol; and (iii) drying the purified polymer to remove traces of methanol. In yet another technique, especially for low molecular weight polymers, the polymer solution is contacted with excess water to remove inorganic residues, the solution is dried and the inert organic solvent is then removed, as by evaporation. The details of suitable techniques are known to persons skilled in the art.

In one embodiment, the nanocomposite is halogenated. Preferably, the halogenated nanocomposite comprises a halogen in the amount of from about 0.1 to about 8% by weight of the butyl rubber polymer in the nanocomposite. More preferably, the halogenated butyl polymer of the nanocomposite comprises a halogen in the amount of from about 0.5 to about 4% by weight of the polymer. Most preferably, the halogenated butyl polymer of the nanocomposite comprises a halogen in the amount of from about 1.5 to about 3.0% by weight of the polymer. The nanocomposite may be halogenated either after it is produced or while dissolved in the polymerization fluid using techniques known to persons skilled in the art, such as those described in Ullmann's Encyclopedia of Industrial Chemistry (Fifth, Completely Revised Edition, Volume A23; Editors Elvers et al.).

The nanocomposite may be cured or uncured. When cured, the nanocomposite may comprise components derived from a curing system. The choice of curing system suitable for use is not particularly restricted and is within the purview of a person skilled in the art. The curing system may be sulphur-based or peroxide-based.

A typical sulfur-based curing system comprises: (i) a metal oxide, (ii) elemental sulfur and (iii) at least one sulfur-based accelerator. The use of metal oxides as a component in the curing system is well known in the art. A suitable metal oxide is zinc oxide, which is typically used in the amount of from about 1 to about 10, preferably from about 2 to about 5, parts by weight per hundred parts by weight butyl polymer in the nanocomposite. Elemental sulfur, comprising component (ii) of the preferred curing system is typically used in amounts of from about 0.2 to about 2 parts by weight, per hundred parts by weight butyl polymer in the composition. Suitable sulfur-based accelerators (component (iii) of the preferred curing system) are typically used in amounts of from about 0.5 to about 3 parts by weight, per hundred parts by weight butyl polymer in the composition. Non-limiting examples of useful sulfur-based accelerators may be selected from the thiuram sulfides such as tetramethyl thiuram disulfide (TMTD), the thiocarbamates such as zinc dimethyl dithiocarbamate (ZDC) and the thiazyl and benzothiazyl compounds such as mercaptobenzothiazyl disulfide (MBTS). Preferably, the sulphur based accelerator is mercaptobenzothiazyl disulfide.

A typical peroxide-based curing system comprises a peroxide curing agent, for example, dicumyl peroxide, di-tert.-butyl peroxide, benzoyl peroxide, 2,2'-bis (tert.-butylperoxy diisopropylbenzene (Vulcup® 40KE), benzoyl peroxide, 2,5-dimethyl-2,5-di(tert-butylperoxy)-hexyne-3, 2,5-dimethyl-2,5-di(benzoylperoxy)hexane, (2,5-bis(tert.-butylperoxy)-2,5-dimethyl hexane and the like. A preferred peroxide curing agent comprising dicumyl peroxide is commercially available under the trademark DiCup 40C. The peroxide curing agent is suitably used in an amount of 0.2 to 7 parts per hundred parts of rubber (phr), preferably 1 to 6 phr, more preferably about 4 phr. Peroxide curing co-agents can also be used. Mention is made of triallyl isocyanurate (TAIC), commercially available under the trademark DIAK 7 from DuPont Or N,N'-m-phenylene dimaleimide know as HVA-2 (DuPont Dow), triallyl cyanurate (TAC) or liquid polybutadiene known as Ricon D 153 (supplied by Ricon Resins). Amounts can be equivalent to those of the peroxide curing agent, or less.

Stabilizers, anti-oxidants and tackifiers may also be added in the usual way and in the normal amounts for compounding butyl-type rubbery polymers.

The nanocomposite preferably exhibits an exfoliated microstructure wherein butyl rubber polymer chains are intercalated with silicate layers. This imparts excellent adhesion of the filler to the rubber and swell resistance. The nanocomposite exhibits enhanced physical properties as compared with existing silica filled butyl rubber compounds. The nanocomposite exhibits excellent resistance to gas permeability, with permeability values of less than 3.4 x 10⁻⁶ cm²/s. The nanocomposite also exhibits improved tensile strength, hardness, Modulus and elongation characteristics.

The nanocomposite will now be further described with reference to the following non-limiting examples.

### Examples

### Equipment

Polymer unsaturation was determined through ¹H NMR spectroscopy. The spectrum was run on a Bruker 500 MH_{Z} ¹H NMR spectrometer. The isoprene content in the polymer was also determined by ¹H NMR. Microstructure information was calculated with the use of previously established integration methods. Peak shifts were referenced to a TMS internal standard.

GPC analysis was performed with the use of a Waters Alliance 2690 seperation module and viscotek Model 300 Triple Detector Array. GPC samples were prepared by dissolution in THF.

### Chemicals

**Isobutene** (Praxair) was purified to a level which, to those skilled in the art, is amenable to the production of butyl rubber.

**Isoprene** was obtained from Exxon Chemical Co and used as received. Isoprene dimer levels were found to be ca. 200 ppm.

**Methyl chloride** was obtained from Dow chemical Co. and was dried with the used of deactivated alumina gel prior to use.

**Organo-nanoclay from the Cloisite family** was supplied by Southern clay products; Inc. These nanoclays were ion exchanged by a quaternary organic ammonium salt with varying cation exchange capacity from 95 to 125 meq/100g clay. The clay was dried at 60°C for 12 hours before use.

### Example 1: Dispersion of nanoclay in CH₃Cl for the AlCl₃ initiated polymerization of IIR

For all of the polymerizations described by Table 1, the noted amounts of Isobutylene, Isoprene and CH₃Cl were added to 1980 mL of CH₃Cl cooled to -95 °C. Once the reaction mixture reached thermal equilibrium, the corresponding amount of AlCl₃ (introduced as a solution in CH₃Cl, 0.80 g of AlCl₃ dissolved in 500 mL of CH₃Cl) was added with the use of a pre-cooled, glass pipet. The reaction was allowed to proceed for the length of time required to attain the equilibrium temperature prior to catalyst addition.

**Table 1: Polymerization Details**

| Example | CH₃Cl | Isobutylene | Isoprene | Nanoclay | Amount AlCl₃ | Conversion |
|---|---|---|---|---|---|---|
| | (ml) | (mL) | (mL) | (g) | (ml) | (%) |
| 1 | 1980 | 220 | 6.6 | ----- | 35 | 80 |
| 2 | 1980 | 220 | 6.6 | 6.8 | 35 | 75 |
| 3 | 1980 | 220 | 6.6 | 9.6 | 35 | 73 |
| 4 | 1980 | 220 | 6.6 | 9.6 | 35 | 72 |
| 5 | 1980 | 220 | 6.6 | 13.6 | 35 | 70 |

As can be seen from Figure 1, the incorporation of nanoclay in the butyl recipe surprisingly has only minimal detrimental effect on the polymerization conversion. As more nanoclay is introduced into the polymerization mixture, the conversion marginally decreases.

### Example 2: Bromination of Butyl containing Nanoclay

140 grams of nanoclay dispersed butyl was dissolved in 900 ml hexane to form a cement solution. Water (125 ml) was added to the cement solution. The solution was brominated with 3.0 ml of elemental bromine. After five minutes of the bromination reaction at room temperature (22°C), the excess bromine was destroyed by the addition of 24 ml of 10 % w/w caustic solution. The solution was then agitated for 5 more minutes. 10 ml of a stabilizer solution (3.6 g of ESBO + stabilizer in 100 ml hexane) was then added. The cement was agitated for few more minute until all stabilizer was mixed in. A suspension of 1.15g of ESBO and 1.4 g of Calcium stearate in a mixture of ethanol and acetone was poured on to the brominated rubber solution. Rubber was steam coagulated and mill dried at 100 °C.

**Table 2: In-situ clay dispersion during butyl polymerization followed by bromination**

| % of nanoclay | Tensile | Hardness | Stress | Permeability |
|---|---|---|---|---|
| in Bromobutyl | (MPa) | (Shore A2) | (@ 300 MPa) | (cm²/atm/sec) |
| 0 % (control) | 5.53 | 50 | 1.36 | 3.4 E-08 |
| 5 % (Cloisite 10A) | 9.65 | 56 | 3.93 | 2.60E-08 |
| 7 % (Cloisite 10A) | 10.4 | 58 | 4.11 | 2.40E-08 |
| 5% (Cloisite 15A) | 9.65 | 55 | 3.5 | 2.70E-08 |

## Claims

1. A process for preparing a butyl rubber nanocomposite comprising:
a) providing an organic fluid suitable for use as a butyl rubber polymerization medium;
b) dispersing a quaternary onium ion substituted siliceous nanoclay in the organic fluid;
c) dissolving in the organic fluid at least one isoolefin monomer and at least one multiolefin monomer;
d) polymerizing the isoolefin monomer and the multiolefin monomer in the presence of the nanoclay, thereby forming a nanocomposite comprising a butyl rubber polymer intercalated with the nanoclay.

2. The process according to claim 1, wherein the quaternary onium ion comprises a phosphonium ion or an ammonium ion.

3. The process according to claim 1, wherein the siliceous nanoclay comprises a montmorillonite clay.

4. The process according to claim 1, wherein the siliceous nanoclay comprises cloisite 10A, cloisite 15A, cloisite 25A, cloisite 30A, or a combination thereof.

5. The process according to claim 1, wherein the siliceous nanoclay is present in an amount of from 5 to 15 wt% of the nanocomposite.

6. The process according to claim 1, wherein the organic fluid is a liquid comprising methyl chloride.

7. The process according to claim 1, wherein the isoolefin monomer comprises isobutylene and wherein the multiolefin monomer comprises isoprene.

8. The process according to claim 1, wherein the multiolefin monomer is present in an amount of from 1 to 10 mol% of the polymer.

9. The process according to claim 1, wherein the multiolefin monomer is present in an amount of at least 4.1 mol % of the polymer.

10. The process according to claim 1, wherein step c) further comprises dissolving at least one styrenic monomer in the organic fluid.

11. The process according to claim 1, wherein the conversion is at least 75%.

12. The process according to claim 1, wherein the siliceous nanoclay comprises trace amounts of alumina.

13. A butyl rubber nanocomposite prepared by:
a) providing an organic fluid suitable for use as a butyl rubber polymerization medium;
b) dispersing a quaternary onium ion substituted siliceous nanoclay in the organic fluid;
c) dissolving in the organic fluid at least one isoolefin monomer and at least one multiolefin monomer;
d) polymerizing the isoolefin monomer and the multiolefin monomer in the presence of the nanoclay, thereby forming a nanocomposite comprising a butyl rubber polymer intercalated with the nanoclay.

14. The nanocomposite of claim 13, wherein the polymer further comprises repeating units derived from at least one styrenic monomer.

15. The nanocomposite of claim 13, wherein the polymer further comprises at least 4.1 mol% of repeating units derived from at least one multiolefin monomer.

16. The nanocomposite of claim 13, wherein the nanocomposite has a gas impermeability of less than 3.6 x 10⁻⁸ cm²/s.

17. The process according to claim 1, wherein the quaternary onium ion comprises a phosphonium ion or an ammonium ion.

18. The process according to claim 1, wherein the siliceous nanoclay comprises a montmorillonite clay.

19. The process according to claim 1, wherein the siliceous nanoclay comprises cloisite 10A, cloisite 15A, cloisite 25A, cloisite 30A, or a combination thereof.

20. The process according to claim 1, wherein the siliceous nanoclay is present in an amount of from 5 to 15 wt% of the nanocomposite.

## Patentansprüche

1. Verfahren zur Herstellung eines Butylkautschuk-Nanoverbundwerkstoffs, bei dem man:
a) ein organisches Fluid, das zur Verwendung als Butylkautschuk-Polymerisationsmedium geeignet ist, bereitstellt;
b) in dem organischen Fluid einen durch ein quartäres Oniumion substituierten silicatischen Nanoton dispergiert;
c) in dem organischen Fluid mindestens ein Isoolefin-Monomer und mindestens ein Multiolefin-Monomer löst;
d) das Isoolefin-Monomer und das Multiolefin-Monomer in Gegenwart des Nanotons polymerisiert, was einen Nanoverbundwerkstoff, der ein mit dem Nanoton interkaliertes Butylkautschukpolymer umfaßt, ergibt.

2. Verfahren nach Anspruch 1, bei dem das quartäre Oniumion ein Phosphoniumion oder ein Ammoniumion umfaßt.

3. Verfahren nach Anspruch 1, bei dem der silicatische Nanoton einen Montmorillonit-Ton umfaßt.

4. Verfahren nach Anspruch 1, bei dem der silicatische Nanoton Cloisit 10A, Cloisit 15A, Cloisit 25A, Cloisit 30A oder eine Kombination davon umfaßt.

5. Verfahren nach Anspruch 1, bei dem der silicatische Nanoton in einer Menge von 5 bis 15 Gew.-%, bezogen auf den Nanoverbundwerkstoff, vorliegt.

6. Verfahren nach Anspruch 1, bei dem es sich bei dem organischen Fluid um eine Methylchlorid umfassende Flüssigkeit handelt.

7. Verfahren nach Anspruch 1, bei dem das Isoolefin-Monomer Isobutylen umfaßt und das Multiolefin-Monomer Isopren umfaßt.

8. Verfahren nach Anspruch 1, bei dem das Multiolefin-Monomer in einer Menge von 1 bis 10 Mol-%, bezogen auf das Polymer, vorliegt.

9. Verfahren nach Anspruch 1, bei dem das Multiolefin-Monomer in einer Menge von mindestens 4,1 Mol-%, bezogen auf das Polymer, vorliegt.

10. Verfahren nach Anspruch 1, bei dem man in Schritt c) ferner mindestens ein Styrol-Monomer in dem organischen Fluid löst.

11. Verfahren nach Anspruch 1, bei dem der Umsatz mindestens 75% beträgt.

12. Verfahren nach Anspruch 1, bei dem der silicatische Nanoton Spurenmengen von Aluminiumoxid umfaßt.

13. Butylkautschuk-Nanoverbundwerkstoff, hergestellt **dadurch**, daß man:
a) ein organisches Fluid, das zur Verwendung als Butylkautschuk-Polymerisationsmedium geeignet ist, bereitstellt;
b) in dem organischen Fluid einen durch ein quartäres Oniumion substituierten silicatischen Nanoton dispergiert;
c) in dem organischen Fluid mindestens ein Isoolefin-Monomer und mindestens ein Multiolefin-Monomer löst;
d) das Isoolefin-Monomer und das Multiolefin-Monomer in Gegenwart des Nanotons polymerisiert, was einen Nanoverbundwerkstoff, der ein mit dem Nanoton interkaliertes Butylkautschukpolymer umfaßt, ergibt.

14. Nanoverbundwerkstoff nach Anspruch 13, wobei das Polymer ferner von mindestens einem Styrol-Monomer abgeleitete Wiederholungseinheiten umfaßt.

15. Nanoverbundwerkstoff nach Anspruch 13, wobei das Polymer ferner mindestens 4,1 Mol-% von mindestens einem Multiolefin-Monomer abgeleitete Wiederholungseinheiten umfaßt.

16. Nanoverbundwerkstoff nach Anspruch 13, wobei der Nanoverbundwerkstoff eine Gasundurchlässigkeit von weniger als 3,6 x 10⁻⁸ cm²/s aufweist.

17. Verfahren nach Anspruch 1, bei dem das quartäre Oniumion ein Phosphoniumion oder ein Ammoniumion umfaßt.

18. Verfahren nach Anspruch 1, bei dem der silicatische Nanoton einen Montmorillonit-Ton umfaßt.

19. Verfahren nach Anspruch 1, bei dem der silicatische Nanoton Cloisit 10A, Cloisit 15A, Cloisit 25A, Cloisit 30A oder eine Kombination davon umfaßt.

20. Verfahren nach Anspruch 1, bei dem der silicatische Nanoton in einer Menge von 5 bis 15 Gew.-%, bezogen auf den Nanoverbundwerkstoff, vorliegt.

## Revendications

1. Procédé de préparation d'un nanocomposite de caoutchouc butyle, comprenant :
a) la mise à disposition d'un fluide organique approprié pour être utilisé en tant que milieu de polymérisation de caoutchouc butyle ;
b) la dispersion d'une nanoargile siliceuse substituée par un ion onium quaternaire dans le fluide organique ;
c) la dissolution dans le fluide organique d'au moins un monomère d'isooléfine et d'au moins un monomère de multioléfine ;
d) la polymérisation du monomère d'isooléfine et du monomère de multioléfine en présence de la nanoargile, formant ainsi un nanocomposite qui comprend un polymère de caoutchouc butyle intercalé avec la nanoargile.

2. Procédé selon la revendication 1, dans lequel l'ion onium quaternaire comprend un ion phosphonium ou un ion ammonium.

3. Procédé selon la revendication 1, dans lequel la nanoargile siliceuse comprend une argile montmorillonite.

4. Procédé selon la revendication 1, dans lequel la nanoargile siliceuse comprend la cloisite 10A, la cloisite 15A, la cloisite 25A, la cloisite 30A ou une de leurs combinaisons.

5. Procédé selon la revendication 1, dans lequel la nanoargile siliceuse est présente en une quantité de 5 à 15 % en poids du nanocomposite.

6. Procédé selon la revendication 1, dans lequel le fluide organique est un liquide comprenant du chlorure de méthyle.

7. Procédé selon la revendication 1, dans lequel le monomère d'isooléfine comprend de l'isobutylène et dans lequel le monomère de multioléfine comprend de l'isoprène.

8. Procédé selon la revendication 1, dans lequel le monomère de multioléfine est présent en une quantité de 1 à 10 % en moles du polymère.

9. Procédé selon la revendication 1, dans lequel le monomère de multioléfine est présent en une quantité d'au moins 4,1 % en moles du polymère.

10. Procédé selon la revendication 1, dans lequel l'étape c) comprend également la dissolution d'au moins un monomère styrénique dans le fluide organique.

11. Procédé selon la revendication 1, dans lequel la conversion est d'au moins 75 %.

12. Procédé selon la revendication 1, dans lequel la nanoargile siliceuse comprend des traces d'alumine.

13. Nanocomposite de caoutchouc butyle préparé par :
a) la mise à disposition d'un fluide organique approprié pour être utilisé en tant que milieu de polymérisation de caoutchouc butyle ;
b) la dispersion d'une nanoargile siliceuse substituée par un ion onium quaternaire dans le fluide organique ;
c) la dissolution dans le fluide organique d'au moins un monomère d'isooléfine et d'au moins un monomère de multioléfine ;
d) la polymérisation du monomère d'isooléfine et du monomère de multioléfine en présence de la nanoargile, formant ainsi un nanocomposite qui comprend un polymère de caoutchouc butyle intercalé avec la nanoargile.

14. Nanocomposite selon la revendication 13, dans lequel le polymère comprend également des unités de répétition dérivées d'au moins un monomère styrénique.

15. Nanocomposite selon la revendication 13, dans lequel le polymère comprend également au moins 4,1 % en moles d'unités de répétition dérivées d'au moins un monomère de multioléfine.

16. Nanocomposite selon la revendication 13, dans lequel le nanocomposite a une imperméabilité aux gaz inférieure à 3,6 x 10⁻⁸ cm²/s.

17. Procédé selon la revendication 1, dans lequel l'ion onium quaternaire comprend un ion phosphonium ou un ion ammonium.

18. Procédé selon la revendication 1, dans lequel la nanoargile siliceuse comprend une argile montmorillonite.

19. Procédé selon la revendication 1, dans lequel la nanoargile siliceuse comprend la cloisite 10A, la cloisite 15A, la cloisite 25A, la cloisite 30A ou une de leurs combinaisons.

20. Procédé selon la revendication 1, dans lequel la nanoargile siliceuse est présente en une quantité de 5 à 15 % en poids du nanocomposite.
